# EUROPÄISCHE PATENTSCHRIFT

(11) **EP 2 811 601 B1**
(45) Veröffentlichungstag und Bekanntmachung des Hinweises auf die Patenterteilung: **14.11.2018**
(21) Anmeldenummer: 14171057.4
(22) Anmeldetag: 04.06.2014
(51) Int. Cl.: H02G 3/22, H02B 1/30, H02G 15/013

(54) **Kabelanschlusskasten**
Cable connection box
Boîte de raccordement de câble

(30) Priorität: 06.06.2013 DE 102013210532
(43) Veröffentlichungstag der Anmeldung: 10.12.2014
(73) Patentinhaber: Siemens Aktiengesellschaft, 80333 München (DE)
(72) Erfinder: Memminger, Oliver, 94127 Neuburg a. Inn (DE); Mihajlovic, Sasa, 94099 Ruhstorf a.d. Rott (DE); Schöberl, Friedrich, 94099 Ruhstorf a.d. Rott (DE); Tutsch, Matthias, 94032 Passau (DE)

(56) Entgegenhaltungen:
- EP-A1- 0 531 172
- DE-B3-102011 100 345
- DE-C1- 19 851 952
- DE-U1- 29 606 194
- GB-A- 1 188 236

## Beschreibung

Die Erfindung betrifft einen Kabelanschlusskasten.

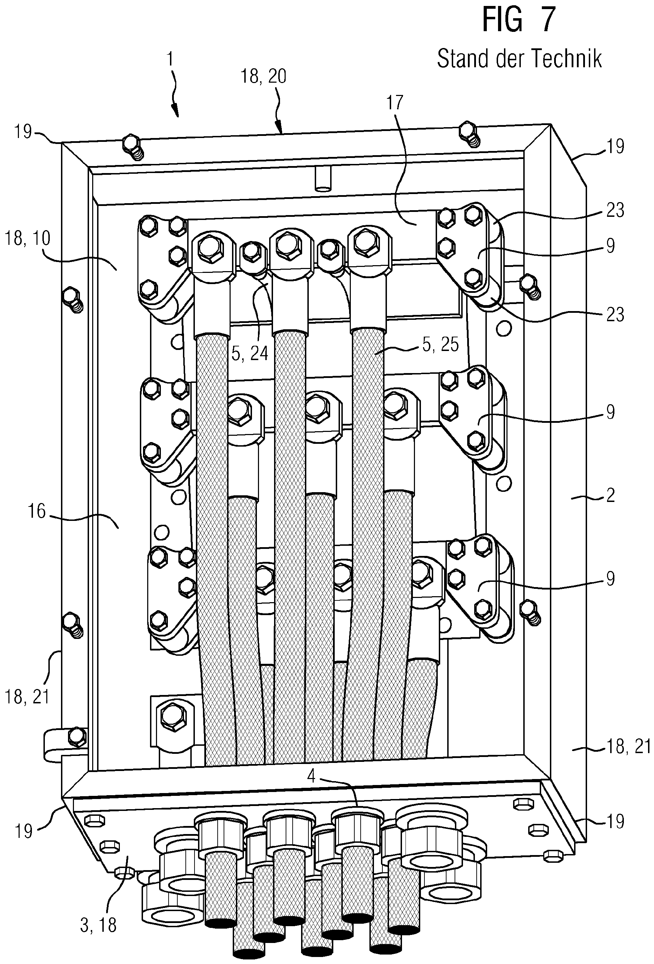

Ein solcher Kabelanschlusskasten (auch im Folgenden kurz nur Anschlusskasten), beispielsweise für einen elektrischen Anschluss einer Generatoranlage einer Windkraftanlage (kurz hier nur Generatoranschlusskasten) an einen Verbraucher/Kunden, wie aus dem Stand der Technik bekannt und beispielhaft in FIG 7 dargestellt, umfasst ein im Wesentlichen quaderförmiges bzw. kastenförmiges (Kabelanschlusskasten-)Gehäuse.

Dabei besteht das Gehäuse aus insgesamt sechs plattenartigen bzw. flächigen, in der Regel miteinander verbundenen bzw. verschraubten (Kabelanschlusskastengehäuse-)Wänden, welche ein im Wesentlichen quaderförmiges Gehäuseinneres des Kabelanschlusskastens mit dortigen (Kabel-)Anschlusselementen umschließen und deren jeweils zwei sich über eine gemeinsame Kante (zwischen diesen jeweils zwei Wänden) aneinander anschließen.

Diese sechs Wände sind dabei eine (Gehäuse-)Rückwand, eine der Rückwand gegenüberliegende, meist abnehmbare Frontplatte oder öffnenbare Kabelanschlusskastenöffnungstür/-klappe (nicht in FIG 7 dargestellt), eine (Gehäuse-)Bodenplatte/-wand, eine der Bodenplatte/-wand gegenüberliegende (Gehäuse-)Deckplatte/-wand sowie zwei sich gegenüberliegende (Gehäuse-)Seitenwände.

Die Frontplatte des Gehäuses ist meist abnehmbar bzw. die Kabelanschlusskastenöffnungstür/-klappe des Gehäuses ist öffnenbar, wodurch Zugang, beispielsweise für Montage-, Installations- und/oder Wartungsarbeiten, zum Gehäuseinneren des Gehäuses erlangbar ist.

Im Gehäuseinneren und dort an der Rückwand ist, wie FIG 7 zeigt, ein Stufentragblech angeordnet, welches drei in unterschiedlicher Tiefe ausgebildete, vertikal übereinander angeordnete Tragstufen - zum Anschluss von Kabel - aufweist.

An jeder der drei Tragstufen ist eine gegenüber dem Stufentragblech durch Isolatoren isolierte, horizontal ausgerichtet, leitfähige Schaltschiene (für jeweils eine Phase eines Dreiphasenwechselstroms) angeordnet.

Über jeder der drei Schaltschienen sind, wie FIG 7 zeigt, jeweils mehrere Eingangskabel/-litzen, z.B. Generatorlitzen, an jeweils mehrere Ausgangs- bzw. Anschlusskabel/-litzen, z.B. Verbraucher-/Kundenlitzen, angeschlossen - und stellen so den elektrischen Anschluss, beispielsweise der Generatoranlage der Windkraftanlage an den bzw. zum Verbraucher, her.

Die Eingangslitzen werden dabei, wie FIG 7 zeigt, über Durchgangsöffnungen bzw. Durchgangsbohrungen in der Rückwand des Gehäuses in diese geführt - und sind dort mittels Kabelschuhe dicht gebündelt mit der jeweiligen Schaltschiene verschraubt.

Die Anschlusskabel treten "von unten" ins Gehäuse ein. Dazu weist die Bodenplatte (auch Kabeldurchführungsplatte) mit Öffnungen versehene Verschraubungen (Kabelverschraubungen) auf, durch welche die Anschlusskabel in das Gehäuse geführt ("eingefädelt") werden - und dort ebenfalls mittels Kabelschuhe dicht gebündelt mit der jeweiligen Schaltschiene verschraubt sind.

Bei Durchführung der Anschlusskabel durch die Kabelverschraubung sind die Anschlusskabel in "ihrer" jeweiligen Kabelverschraubung verschraubbar, wodurch die Anschlusskabel innerhalb des Gehäuses zugentlastet/-bar sind.

Bei Einrichtung des Anschlusskastens bzw. bei Montage/Anschluss, z.B. bei Anschluss der Generatoranlage der Windkraftanlage an den Verbraucher, müssen so - bei abgenommener Frontplatte bzw. geöffneter Kabelanschlusskastenöffnungstür/- klappe - die Anschlusskabel von unten durch die Kabeldurchführungsplatte, d.h. durch die Kabelverschraubungen in der Kabeldurchführungsplatte, geführt ("Einfädeln von unten"), diese dann zu der jeweiligen Schaltschiene (hoch-)gezogen und schließlich mit der jeweiligen Schaltschiene verschraubt werden.

Die Eingangslitzen bzw. Generatorlitzen sind durch die jeweiligen Öffnungen in der Rückwand zu führen und dann ebenfalls mit der jeweiligen Schaltschiene zu verschrauben.

Die Frontplatte des Anschlusskastengehäuses kann dann wieder aufgesetzt bzw. die Kabelanschlusskastenöffnungstür/-klappe des Anschlusskastengehäuses kann dann wieder geschlossen werden, wodurch der Anschlusskasten fertig montiert/angeschlossen ist.

Ist ein solcher Anschlusskasten beispielsweise für eine Generatoranlage einer Windkraftanlage vorgesehen - und ist ein solcher Generatoranschlusskasten demzufolge in einer Gondel der Windkraftanlage angeordnet, so erfordert die Montage bzw. der Kabelanschluss, insbesondere der Kabelanschluss der Anschlusskabel bzw. Generatoranschlusskabel, einen nicht unerheblichen Kraftaufwand, müssen doch die Anschlusskabel beim Kabelanschluss gegen ihr - nicht unerhebliches - Eigengewicht "nach oben" (in die Gondel) gezogen werden. Insbesondere beim "Einfädeln von unten" der Generatoranschlusskabel ist Kraft und Geschick erforderlich.

Auch sonst erfordert die Montage bzw. der Anschluss eines solchen Anschlusskasten einen nicht geringen Aufwand bzw. Anstrengung und nicht geringe Fertigkeiten und Erfahrung, muss auch hier bzw. müssen die Anschlusskabel auch hier aufwendig "von unten eingefädelt" werden und ist die Verschraubung der Kabel, d.h. der Eingangslitzen und der Anschlusskabel, aufgrund deren dichten und kompakten Bündelung an der jeweiligen Schaltschiene - bei dortig beengten Innenraumverhältnissen im Anschlusskasten - nicht einfach zu bewerkstelligen.

Die dichte und kompakte Bündelung der Kabel bei solchen Anschlusskästen kann bzw. je mehr Kabel bei solchen Anschlusskästen verwendet werden, was demzufolge eine kompakte und gebündelte Kabelführung in den bzw. im Anschlusskasten bedingt, kann dies darüber hinaus zu einer Erwärmung der Kabel, insbesondere der Anschlusskabel, und so in Folge des Anschlusskastens führen. Auch induktive und konvektive Effekte müssen insbesondere bei solchen dichten und kompakten Kabelbündel beachtet werden. Gegebenenfalls sind hier diesbezügliche zusätzliche, aufwendige und demzufolge Kosten intensive/treibende Sicherheitsvorkehrungen, wie zusätzliche Abschirmungen, bei solchen Anschlusskästen notwendig.

Einen weiteren Kabelanschlusskasten aus dem Stand der Technik ist in der EP 0 531 172 beschrieben.

Der Erfindung liegt die Aufgabe zugrunde, die Nachteile im Stand der Technik zu verbessern, insbesondere eine leichtere Montage des Anschlusskastens bzw. der Anschlusskabel im Anschlusskasten, insbesondere von Generatoranschlusskabel in einem Generatoranschlusskasten, zu ermöglichen.

Die Aufgabe wird durch einen Kabelanschlusskasten mit den Merkmalen gemäß dem unabhängigen Patentanspruch gelöst.

Die Erfindung geht aus von einem Kabelanschlusskasten mit einem Gehäuse mit zumindest einer ersten Gehäusewand, welche zumindest eine Durchführung für ein Kabel aufweist, und mit zumindest einer zweiten, sich an die erste Gehäusewand anschließenden Gehäusewand, über bzw. durch welche der Kabelanschlusskasten öffnenbar - und dadurch Zugang zu einem Inneren des Kabelanschlusskastens erlangbar ist.

Erfindungsgemäß ist bei dem Kabelanschlusskasten weiter vorgesehen, dass die Durchführung als eine in der ersten Gehäusewand eingebrachte Aussparung mit einer Aussparungsöffnung ausgebildet ist, welche Aussparungsöffnung zu der zweiten, sich an die erste Gehäusewand anschließenden Gehäusewand gerichtet ist.

Dabei meint die Erfindung mit "der sich an die erste Gehäusewand anschließenden zweiten Gehäusewand" des Kabelanschlusskastens, dass die erste und die zweite Gehäusewand sich aneinander - unmittelbar, beispielsweise über eine "(unmittelbare) gemeinsame Kante" bei der ersten und der zweiten Gehäusewand bzw. über sich (unmittelbar) gegenüberliegende Gehäusewandränder der ersten und der zweiten Gehäusewand - oder - mittelbar, beispielweise nur getrennt über eine (abnehmbare) Abschlussleiste zwischen der ersten und der zweiten Gehäusewand bzw. zwischen den (dann mittelbar) gegenüberliegenden Gehäusewandränder der ersten und der zweiten Gehäusewand, anschließen.

Kurz und vereinfacht ausgedrückt, die erste und die zweite Gehäusewand bilden eine - unmittelbare oder mittelbare - gemeinsame Kante aus - oder ein Gehäusewandrand der ersten Gehäusewand schließt - unmittelbar oder mittelbar - an einen Gehäusewandrand der zweiten Gehäusewand an.

Auch meint die Erfindung mit "der in der ersten Gehäusewand eingebrachten Aussparung mit Aussparungsöffnung" einen sich von einem Rand der ersten Gehäusewand "nach dessen Inneren" erstreckenden Materialabtrag an dem Gehäusewandrand. Anders ausgedrückt, der ursprüngliche Gehäusewandrand der ersten Gehäusewand bzw. die ursprüngliche Gehäusewandkante der ersten Gehäusewand tritt - gegenüber dessen ursprünglichen Verlauf - "nach innen" zurück - und gibt so die Aussparung mit deren Aussparungsöffnung frei.

Weiter meint die Erfindung auch mit "der zur zweiten Gehäusewand hin gerichteten Aussparungsöffnung der Aussparung in der ersten Gehäusewand", dass die Aussparungsöffnung an demjenigen Gehäusewandrand der ersten Gehäusewand vorgesehen ist, wo die zweite Gehäusewand an die erste Gehäusewand - unmittelbar oder mittelbar - anschließt bzw. die erste Gehäusewand eine - unmittelbare oder mittelbare - gemeinsame Kante mit der zweiten Gehäusewand bildet.

Die Aussparung ist dabei erfindungsgemäß nicht auf eine bestimmte Form festgelegt, sondern kann beliebige Formen annehmen. Beispielsweise kann sie rechteckig ausgebildet sein. D.h., die Aussparung erscheint dabei ähnlich einer Stufe in der ersten Gehäusewand bzw. in dem Gehäusewandrand/in der Gehäusewandkante der ersten Gehäusewand. Auch eine gebogene, z.B. halbkreisförmige oder halbellipsenförmige, Aussparung in der ersten Gehäusewand bzw. in dem Gehäusewandrand/der Gehäusewandkante der ersten Gehäusewand ist möglich.

Ungeachtet der Form können auch mehrere - jeweils gleich oder unterschiedlich geformte - erfindungsgemäße Aussparungen in der ersten Gehäusewand - jeweils mit ihrer Aussparungsöffnungen hin zu der zweiten Gehäusewand gerichtet - ausgebildet sein.

Vereinfacht ausgedrückt, die Erfindung sieht - anders als der Stand der Technik mit "im Inneren von Kabelanschlusskastengehäusewänden liegende, damit umschließend berandete und damit ein Durchfädeln von Kabeln erfordernde Durchführungen - eine erfindungsgemäße Durchführung - als Aussparung mit Aussparungsöffnung - am Rand einer Kabelanschlusskastengehäusewand vor - und zwar an dieser Kabelanschlusskastengehäusewand bzw. an diesem Kabelanschlusskastengehäusewandrand, an welcher bzw. an welchem sich eine öffnenbare weitere Kabelanschlusskastengehäusewand bzw. deren Kabelanschlusskastengehäusewandrand - unmittelbar oder mittelbar - anschließt, so dass - bei geöffneter weiterer Kabelanschlusskastengehäusewand - die erfindungsgemäße Durchführung bzw. die Aussparung in der Kabelanschlusskastengehäusewand - über deren Aussparungsöffnung - auf einer Seite offen/unberandet - und so "frei zugänglich" - ist.

Kurz auch, die bisherige, allseitig geschlossene Durchführung in der Kabelanschlussgehäusewand wurde "nach vorne (zum Rand der Kabelanschlussgehäusewand) geöffnet".

Die Erfindung ermöglicht so durch ihre erfindungsgemäße Ausgestaltung von erster und zweiter Gehäusewand bzw. der Durchführung/Aussparung in der ersten Gehäusewand, dass - bei geöffneter zweiter Gehäusewand - ein Kabelanschluss bzw. eine Kabelmontage, beispielsweise eine Verschraubung eines Kabels an ein Kabelanschlusselement, wie eine Schaltschiene, im Inneren des Kabelanschlusskastens/Gehäuses durch einfaches frontales "Einlegen" eines Kabels in die Aussparung - anstelle von "Durchfädeln" eines Kabel durch eine allseitig umrandete Durchführung - möglich ist.

Kurz und vereinfacht ausgedrückt, die Erfindung ermöglicht eine ungehinderte, frontale Kabelmontage/-anschluss bzw. - Verschraubung im Kabelanschlusskasten durch einfaches Einlegen eines Kabel in die Aussparung der ersten Kabelanschlusskastengehäusewand bei geöffneter zweiter Kabelanschlusskastengehäusewand "von Vorne".

Die Erfindung stellt somit eine (konstruktiv) einfache und kostengünstige Lösung für eine einfache und kostengünstige Kabelmontage/Kabelanschluss bei einem - insbesondere schwer zugänglichen - Kabelanschlusskasten zu Verfügung.

Eine, wie durch die Erfindung ermöglichte, einfache Montage reduziert eine Anzahl von Montagestunden und führt so zu einer kostengünstigen Lösung.

Insbesondere ermöglicht die Erfindung auch, dass bisherige, nachteilige Kabelanschlusskästen aus dem Stand der Technik einfach und kostengünstig umgerüstet - und so weiterverwendet - werden können, muss nur eine bestehende Durchführung in einer Kabelanschlussgehäusewand entsprechend der Erfindung abgeändert oder eine neue erfindungsgemäße Durchführung/Aussparung in die Kabelanschlussgehäusewand eingebracht werden.

Eine Stufenanordnung von Kabeln, d.h. bzw. beispielsweise ein Stufentragblech mit mehreren Anschlusstragstufen und dort - insbesondere über Schaltschienen - verschraubten Kabeln, steht auch weiterhin beim erfindungsgemäßen Kabelanschlusskasten mit dessen "frontaler" Montage zur Verfügung.

Darüber hinaus ermöglicht die Erfindung, Schaltschienen/Kabelanschlussschienen im Kabelanschlusskasten nebeneinander zu platzieren, wodurch die - sonst vorhandene - dichte und kompakte Bündelung der Kabel/Anschlusskabel im Kabelanschlusskasten reduziert werden kann.

Die Erwärmung der Kabel/Anschlusskabel kann gesenkt, induktive und konvektive Effekte reduziert werden. Gegebenenfalls bisher bzw. sonst diesbezügliche zusätzliche, aufwendige und demzufolge Kosten intensive/treibende notwendige Sicherheitsvorkehrungen, wie zusätzliche Abschirmungen, können bei der Erfindung entfallen.

Bevorzugte Weiterbildungen der Erfindung ergeben sich auch aus den abhängigen Ansprüchen.

Nach einer bevorzugten Weiterbildung ist vorgesehen, dass die erste Gehäusewand mehrere Durchführungen aufweist, welche jeweils als eine in der ersten Gehäusewand eingebrachte Aussparung ausgebildet ist, deren Aussparungsöffnung zu der zweiten, sich an die erste Gehäusewand anschließende Gehäusewand gerichtet ist ("nebeneinander angeordnete Kabeleinführungen") .

Insbesondere kann weiter vorgesehen sein, dass die mehreren Aussparungen kammartig nebeneinander liegend in der ersten Gehäusewand eingebracht sind.

Dadurch, d.h. durch die nebeneinander angeordneten Kabeleinführungen, können die Kabel, insbesondere die Anschlusskabel, "aufgefächert" und damit weniger gebündelt (in den bzw. im Kabelanschlusskasten) geführt werden. Solche aufgefächert geführten, weniger gebündelt und mit Abstand geführten Kabel/ Anschlusskabel können frei konvektieren - und brauchen nicht vor Überhitzung geschützt werden. Diese Bauraumoptimierung beim Kabelanschlusskasten spart so auch Kosten durch die Einsparung von Montagezeit und Bauraum.

Nach einer weiteren bevorzugten Weiterbildung ist vorgesehen, dass in dem Anschlusskasten zumindest eine gegenüber dem Anschlusskasten isolierte Anschlussschiene (Schaltschiene) angeordnet ist. Diese kann derart eingerichtet sein, dass dort das durch die erste Gehäusewand in den Anschlusskasten einführbare Kabel verschraubbar ist, insbesondere dass mehrere durch die erste Gehäusewand in den Anschlusskasten einführbare Kabel, dort verschraubbar sind. Insbesondere kann hier weiter vorgesehen sein, dass die mehreren durch die erste Gehäusewand in den Anschlusskasten einführbare Kabel dort in einer Reihe nebeneinander verschraubbar sind.

Weiter kann auch vorgesehen sein, dass in dem Anschlusskasten drei solche Anschlussschienen, insbesondere in Reihe nebeneinander, angeordnet sind, die jeweils für einen Phasenanschluss vorgesehen sind. Auch können zwei oder auch mehr als drei solcher Anschlussschienen, insbesondere in Reihe nebeneinander, im Anschlusskasten angeordnet sein.

Durch die nebeneinander an einer Anschlussschiene verschraubten Kabel, insbesondere durch die in Reihe nebeneinander angeordneten Anschlussschienen mit jeweils dort nebeneinander verschraubten Kabel, können die Kabel, insbesondere die Anschlusskabel, "aufgefächert" und damit weniger gebündelt (in den bzw. im Kabelanschlusskasten) geführt werden. Solche aufgefächert geführten, weniger gebündelt und mit Abstand geführten Kabel/Anschlusskabel können frei konvektieren - und brauchen nicht vor Überhitzung geschützt werden. Diese Bauraumoptimierung beim Kabelanschlusskasten spart so auch Kosten durch die Einsparung von Montagezeit und Bauraum.

Ferner kann auch vorgesehen sein, dass - im Falle mehrerer in dem Anschlusskasten angeordneter Anschlussschienen - diese vertikal übereinander angeordnet sind. Hierzu kann ein Stufentragblech mit, insbesondere in unterschiedlicher Tiefe, vertikal übereinander angeordneter Anschlusstragstufen im Anschlusskasten vorgesehen sein, an welchen Anschlusstragstufen die Anschlussschienen - dann in vertikal und gegebenenfalls in unterschiedlicher Tiefe gestaffelt - angeordnet sind.

Nach einer weiteren bevorzugten Weiterbildung ist zumindest eine dritte Gehäusewand vorgesehen, welche weitere Durchführungen für Kabel, beispielsweise Eingangs- oder Generatorlitzen/-kabel, in den Anschlusskasten aufweist.

Die Anschlussschiene kann bzw. die Anschlussschienen können dann derart weiter eingerichtet sein, dass durch die dritte Gehäusewand in den Anschlusskasten eingeführte Kabel ebenfalls dort, insbesondere in einer Reihe nebeneinander, verschraubbar sind.

Nach einer besonders bevorzugten Weiterbildung ist ein Kabelführungsrahmen vorgesehen, welcher eingerichtet ist, um das Kabel, insbesondere mehrere Kabel in Reihe nebeneinander in dem Kabelführungsrahmen angeordnet, zu führen. Der Kabelführungsrahmen kann weiter auch so ausgebildet sein, dass das Kabel bzw. die Kabel dort zugentlastend geführt wird bzw. werden.

Insbesondere kann hier vorgesehen sein, dass der Kabelführungsrahmen derart an der ersten Gehäusewand anordnenbar ist, dass eine Öffnung des Kabelführungsrahmens mit der Aussparung (in der ersten Gehäusewand) fluchtet, wodurch der in diesem derartigen Zustand mit der ersten Gehäusewand verschraubte Kabelführungsrahmen mit der Aussparung eine gemeinsame Öffnung bildet, durch welche das Kabel in den Anschlusskasten einführbar, insbesondere zugentlastend einführbar, ist.

Weiter kann auch eine, insbesondere isolierende, z.B. aus Kunststoff bestehende, Leiste vorgesehen werden, welche derart zwischen der ersten Gehäusewand und der zweiten Gehäusewand angeordnet ist, dass die Aussparungsöffnung mittels der Leiste begrenzt wird. Diese Leiste kann auch zu einer Schutzarterfüllung eingerichtet sein. Dadurch kann eine Induktion zwischen Phaseneinheiten, z.B. U, V, W, insbesondere bei den nebeneinander angeordneten Kabeleinführungen aufgehoben werden.

Insbesondere kann die Leiste, beispielsweise eine Kunststoffabschlussleiste, über eine Länge einer gemeinsamen Kante zwischen der ersten Gehäusewand und der zweiten Gehäusewand zwischen der ersten Gehäusewand und der zweiten Gehäusewand angeordnet sein.

Nach einer bevorzugten Weiterbildung ist vorgesehen, dass die erste Gehäusewand eine Bodenplatte (Kabeldurchführungsplatte) und/oder die zweite Gehäusewand eine abnehmbare Frontplatte oder eine Kabelanschlusskastenöffnungstür/-klappe und/oder die dritte Gehäusewand eine (Gehäuse-)Rückwand sind/ist.

Bevorzugt kann auch weiter vorgesehen sein, dass der Anschlusskasten ein Generatoranschlusskasten, insbesondere ein in einer Gondel einer Windkraftanlage angeordneter Windkraftanlagengeneratoranschlusskasten, ist. Gerade bei dortiger ungünstiger Montage/Anschlussumgebung lässt sich durch die Erfindung die Montage/Installation erleichtern - und so Zeit und/oder Kosten sparen.

Auch kann vorgesehen sein, dass der Anschlusskasten ein Motoranschlusskasten, insbesondere für den Anschluss von Elektromotoren an ein elektrisches Netz, oder ein Anschlusskasten für andere elektrische Verbraucher oder Erzeuger an ein Netz ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Die Erfindung ist jedoch nicht auf die in den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Gleiche bzw. funktionsgleiche Bauteile weisen in den Figuren gleiche Bezugszeichen auf.

Es zeigen:
- FIG 1: eine erste (Gesamt-)Ansicht eines Kabelanschlusskastens mit geöffneter/abgenommener (mehrteiliger) Frontplatte gemäß einem ersten Ausführungsbeispiel,
- FIG 2: eine zweite (Detail-)Ansicht des Kabelanschlusskastens mit geöffneter/abgenommener (mehrteiliger) Frontplatte gemäß dem ersten Ausführungsbeispiel,
- FIG 3: eine dritte Ansicht des Kabelanschlusskastens mit geschlossener (mehrteiliger) Frontplatte gemäß dem ersten Ausführungsbeispiel,
- FIG 4: eine erste Ansicht eines Kabelanschlusskastens mit geöffneter/abgenommener (mehrteiliger) Frontplatte gemäß einem zweiten Ausführungsbeispiel,
- FIG 5: eine zweite Ansicht des Kabelanschlusskastens mit geöffneter/abgenommener (mehrteiliger) Frontplatte gemäß dem zweiten Ausführungsbeispiel,
- FIG 6: eine dritte Ansicht des Kabelanschlusskastens mit geschlossener (mehrteiliger) Frontplatte gemäß dem zweiten Ausführungsbeispiel,
- FIG 7: eine Ansicht eines Kabelanschlusskastens aus dem Stand der Technik.

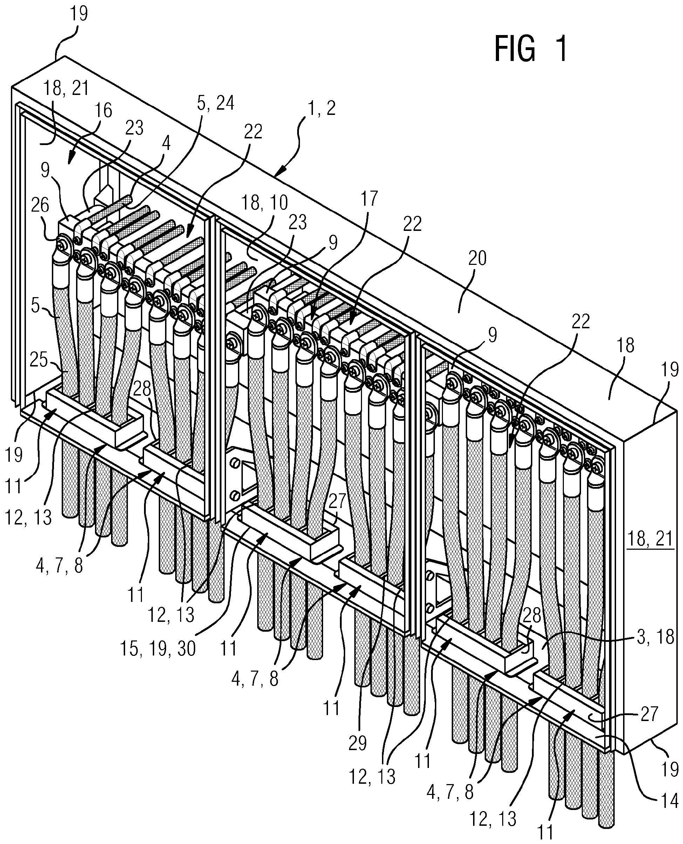

Kabelanschlusskasten mit frontaler Einführung der Anschlusskabel (Generator- und Motoranschlusskabel) und nebeneinander angeordneter Schaltschienen (Figuren 1,2 und 3)

Figuren 1, 2 und 3 zeigen in - drei - Ansichten jeweils einen (ersten) Kabelanschlusskasten 1 für den (elektrischen) Anschluss eines Generators einer Windkraftanlage an ein elektrisches Verteilungsnetz (Verbraucher/Kunde) (nicht dargestellt) .

Der Kabelanschlusskasten 1 ist ebenso für andere dynamoelektrische Maschinen, wie Motoren, geeignet.

Der Kabelanschlusskasten 1 ist dabei in einer Gondel der Windkraftanlage montiert (nicht dargestellt).

Der Kabelanschlusskasten 1 bzw. Generatoranschlusskasten 1 (auch im Folgenden kurz nur Anschlusskasten 1) weist ein im Wesentlichen quaderförmiges bzw. kastenförmiges (Kabelanschlusskasten-)Gehäuse 2 auf.

Diese Gehäuse 2 umfasst insgesamt sechs plattenartige bzw. flächige, miteinander verbundene bzw. verschraubte (Kabelanschlusskastengehäuse-)Wände 18, welche ein im Wesentlichen auch quaderförmiges Gehäuseinneres 16 des Kabelanschlusskastens 1 mit dortigen (Kabel-)Anschlusselementen 17 umschließen und deren jeweils zwei sich über eine gemeinsame Kante 19 (zwischen diesen jeweils zwei Wänden 18) aneinander anschließen.

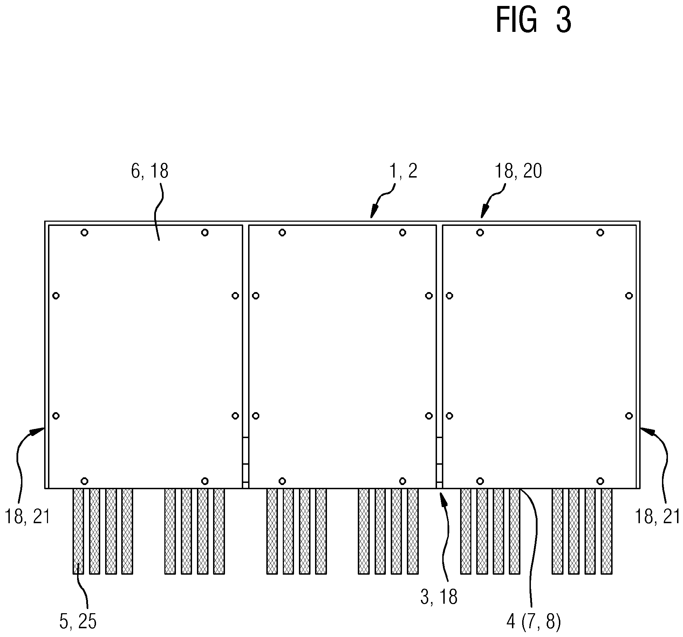

Die sechs Wände 18 des Anschlusskastens 1 sind dabei eine (Gehäuse-)Rückwand 10, eine der Rückwand 10 gegenüberliegende, abnehmbare, mehrteilige - in diesem Fall dreiteilige - Frontplatte 6 (vgl. FIG 3), eine (Gehäuse-)Bodenplatte/-wand 3, eine der Bodenplatte/-wand 3 gegenüberliegende (Gehäuse-) Deckplatte/-wand 20 sowie zwei sich gegenüberliegende (Gehäuse-)Seitenwände 21.

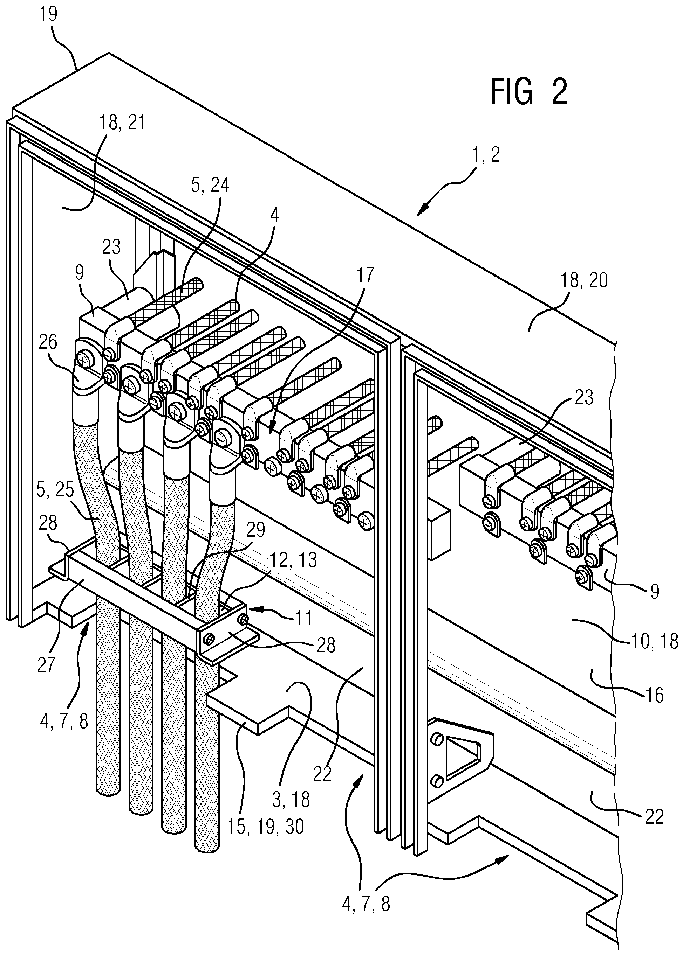

Die dreiteilige Frontplatte 6 des Gehäuses 2 ist - wie die Figuren 1 und 2 (im Vergleich zu FIG 3) erkennen lassen - abnehmbar, wodurch Zugang für Montage-, Installations- und/oder Wartungsarbeiten zum Gehäuseinneren 16 des Gehäuses 2 des Anschlusskastens 1 erlangbar ist.

Das Gehäuseinnere 16 des Anschlusskastens 1 unterteilt sich dabei, wie FIG 1 zeigt, in drei Teilbereiche/Abteilungen 22, in welchen jeweils eine bestimmte Anzahl von Kabel 5 angeschlossen sind.

Im (die drei Abteilungen 22 aufweisenden) Gehäuseinneren 16 und dort an der Rückwand 10 sind, wie FIG 1 und 2 zeigen, drei, d.h. in jeder Abteilung 22 des Gehäuses 2 des Anschlusskastens 1 eines, gegenüber dem Gehäuse 2 durch Isolatoren 23 isolierte, horizontal ausgerichtete, nebeneinander und in ihrer vertikalen Höhe leicht versetzt angeordnete, leitfähige Schaltschienen 9 (für jeweils eine Phase U, V, W eines Dreiphasenwechselstroms) angeordnet.

Über jeder der drei Schaltschienen 9 sind, wie FIG 1 und 2 zeigen, jeweils mehrere Eingangskabel/-litzen 24 (5), d.h. Generatorlitzen 24 des Generators der Windkraftanlage, an jeweils mehrere Ausgangs- bzw. Anschlusskabel/-litzen 25 (5), d.h. Verbraucher-/Kundenlitzen 25, angeschlossen - und stellen so den elektrischen Anschluss der Generators der Windkraftanlage an den bzw. zum Verbraucher her.

Die Eingangslitzen 24 (5) werden dabei, wie FIG 1 und 2 zeigen, über Durchgangsöffnungen 4 bzw. Durchgangsbohrungen 4 in der Rückwand 10 des Gehäuses 2 in dieses geführt - und sind dort mittels Kabelschuhe 26 gebündelt und nebeneinander mit/an der (je nach ihrer Phase) jeweiligen Schaltschiene 9 verschraubt. Der generatorseitige Anschluss des Anschlusskastens 1 ist/wird so bewerkstelligt.

Wie weiter FIG 1 und 2 zeigen, weist die Bodenplatte 3 des Gehäuses 2 kammartig (d.h. in Reihe nebeneinander) angeordnete, nach "vorne offene", d.h. in Richtung der Frontplatte 6 offene, rechteckige, in diesem Fall insgesamt sechs, Aussparungen 7 - mit entsprechenden (sechs) Aussparungsöffnungen 8 (für jeweils vier Kabel 5 bzw. vier der Anschlusskabel/Kundenlitzen 25 (5)) - auf.

Dabei ist die Breite einer solchen Aussparung 7 bzw. deren Aussparungsöffnung 8 derart bemessen, dass eine bestimmte (vorgebbare) Anzahl von Kabel 5 (in diesem Fall vier Kabel 5) dort (bei deren "Nebeneinanderanordnung") unbeengt durchführbar/einlegbar sind.

Die Aussparungen 7 sind auch jeweils so in der Bodenplatte 3 eingebracht, dass jeweils zwei - der insgesamt sechs - Aussparungen 7 vertikal unterhalb einer Schaltschiene 9 angeordnet sind, wodurch die kürzeste Kabelführung der Anschlusskabel/Kundenlitzen 25 (5) im Anschlusskasten 1 (von dessen jeweiliger Bodenplattenaussparung 7 zur jeweiligen Schaltschiene 9) gewährleistet ist.

Der Anschlusskasten 1 ermöglicht so durch seine Ausgestaltung seiner Bodenplatte 3 bzw. der dortigen nach vorne offenen Durchführungen 4/Aussparungen 7, dass - bei geöffneter Frontplatte 6 (vgl. FIG 1 und 2) - der Kabelanschluss der Anschlusskabel 25 (5) bzw. der Kundenlitzen 25 (5) - hier insgesamt vier (Anzahl der Anschlusskabel/Kundenlitzen 25 (5) pro Aussparung 7) mal zwei (Anzahl der Aussparungen 7 pro Abteilung 22 bzw. Schaltschiene 9) mal drei (Anzahl der Abteilungen 22 bzw. Schaltschienen 9) Anschlusskabel/Kundenlitzen 25 (5), d.h. (insgesamt) 24 Anschlusskabel/Kundenlitzen 25 (5) - an die Schaltschienen 9 im Gehäuseinneren 16 des Anschlusskastens 1 durch einfaches frontales "Einlegen" der Anschlusskabel 25 (5) bzw. Kundenlitzen 25 (5) in die Aussparungen 7 erfolgen kann.

Sind die Anschlusskabel 25 (5) bzw. Kundenlitzen 25 (5) "von vorne" in die Aussparungen 7 eingelegt, werden die Anschlusskabel 25 (5) bzw. Kundenlitzen 25 (5) (wie die Generatorlitzen 24 (5)) mittels Kabelschuhe 26 gebündelt und nebeneinander mit/an der (je nach ihrer Phase U, V, W) jeweiligen Schaltschiene 9 verschraubt.

Die Anschlusskabel 25 (5) bzw. die Kundenlitzen 25 treten so - nach deren frontaler Montage und bei geschlossener/nach Schließen der Frontplatte 3 "von unten" ins Gehäuse 2 ein (vgl. FIG 3). Im Gehäuse 2 sind die Anschlusskabel/Kundenlitzen 25 (5) und die Eingangslitzen/Generatorlitzen 24 mittels der Kabelschuhe 26 dicht gebündelt mit der jeweiligen Schaltschiene 9 verschraubt (vgl. FIG 1).

Auch der kundenseitige Anschluss des Anschlusskastens 1 ist so bewerkstelligt; der Anschlusskasten 1 ist angeschlossen.

Wie FIG 1 und 2 auch zeigen, sind bzw. werden jeweils vier, d.h. eine bestimmte, vorgebbare Anzahl, der Anschlusskabel/ Kundenlitzen 25 (5) durch einen Kabelführungsrahmen 11 - damit in diesem Fall insgesamt sechs Kabelführungsrahmen 11 für die insgesamt 24 Anschlusskabel/Kundenlitzen 25 (5) - gebündelt geführt.

Wie FIG 1 und 2 zeigen, sind diese Kabelführungsrahmen 11 jeweils als rechteckige Rahmen mit jeweils zwei Längsteilen 27 und zwei, mit den Längsteilen 27 verschraubten Seitenteilen 28 ausgebildet. Innerhalb der Kabelführungsrahmen 11 werden die jeweils vier Anschlusskabel/Kundenlitzen 25 (5) durch Trennstege 29 getrennt bzw. getrennt gehalten/geführt.

Beim Anschluss der Anschlusskabel/Kundenlitzen 25 (5) an die Schaltschienen 9 werden, wie FIG 2 zeigt, die Anschlusskabel/Kundenlitzen 25 (5) jeweils als Viererbündel in die Kabelführungsrahmen 11 eingelegt. Im Anschluss daran werden, wie FIG 1 verdeutlicht, die gebündelten Anschlusskabel/Kundenlitzen 25 (5), d.h. die Viererbündel inklusive ihrer Kabelführungsrahmen 11 von vorne in die Aussparungen 7 eingelegt. Die Anschlusskabel/Kundenlitzen 25 (5) werden mittels der Kabelschuhe 26 an die Schaltschienen 9 geschraubt; die Kabelführungsrahmen 11 werden so (im Gehäuseinneren 16) mit der Bodenplatte 3 des Gehäuses 2 verschraubt, dass deren Öffnungen 12 mit den Aussparungen 7 fluchten, wodurch die in diesem derartigen Zustand mit der Bodenplatte 3 verschraubten Kabelführungsrahmen 11 mit den Aussparungen 7 jeweils gemeinsame Durchgangsöffnungen 13 für die (gebündelten) Anschlusskabel/Kundenlitzen 25 (5) bilden.

Die (verschraubten) Kabelführungsrahmen 11 dienen gleichzeitig (Viererbündel/gebündelte Führung) auch zur Zugentlastung der Anschlusskabel/Kundenlitzen 25 (5) im Anschlusskasten 1.

Sind die Anschlusskabel/Kundenlitzen 25 (5) an den Schaltschienen 9 und die Kabelführungsrahmen 11 an den Aussparungen 7 bzw. an der Bodenplatte 3 verschraubt, werden, wie FIG 1 auch zeigt, die Aussparungen 8 mittels einer Kunststoffleiste 14 - entlang der gemeinsamen Kante 15 zwischen Bodenplatte 3 und Frontplatte 6 - abgedeckt.

Diese Kunststoffleiste 14 dient der Schutzarterfüllung und hebt die Induktion zwischen den Phasen U, V, W der Abteilungen 22 bzw. bei den diesbezüglich nebeneinander angeordneten Anschlusskabel/Kundenlitzen 25 (5) auf.

D.h., diese Kunststoffleiste 14 wird entlang der die Aussparungen 7 bzw. Aussparungsöffnungen 8 aufweisenden Kante/Rand 30 der Bodenplatte 3 über deren gesamte (Bodenplatten-)Breite angeordnet/verschraubt- und deckt so die Aussparungen 7 bzw. die Aussparungsöffnungen 8 - entlang der gesamten Kante 30 der Bodenplatte 3 bzw. der gesamten gemeinsamen Kante 15 von Bodenplatte 3 und Frontplatte 6 ab.

Der Anschlusskasten 1 kann so - nach Verschraubung der Anschlusskabel/Kundenlitzen 25 (5) an den Schaltschienen 9, der Kabelführungsrahmen 11 an den Aussparungen 7 bzw. an der Bodenplatte 3 und der Kunststoffleiste 14 an der Kante 30 der Bodenplatte 3 - durch Auflegen und Befestigung der Frontplatte 6 am Gehäuse 2 wieder geschlossen werden.

Dieser Anschlusskasten 1 ermöglicht so eine ungehinderte, frontale Kabelmontage/-anschluss bzw. -Verschraubung im Anschlusskasten 1 durch einfaches Einlegen der Anschlusskabel 25 (5) bzw. Kundenlitzen 25 (5) in die Aussparungen 7 der Bodenplatte 3 bei geöffneter Frontplatte 6 "von vorne".

Durch die nebeneinander an der jeweiligen Anschlussschiene 9 verschraubten Kabel 5, d.h. die Anschlusskabel/Kundenlitzen 25 (5) und Generatorlitzen 24 (5), sowie durch die in Reihe nebeneinander angeordneten (drei) Schaltschienen 9 sind die (verschraubten) Kabel 5 derart "aufgefächert", damit weniger gebündelt (als kreisförmige Kabelbündel) und mit Abstand geführt, dass die Kabel 5 bzw. insbesondere die Anschlusskabel/Kundenlitzen 25 (5) frei konvektieren können - und nicht vor Überhitzung (mittels entsprechender Schutzelemente) geschützt werden müssen.

Dieser Anschlusskasten 1 mit seiner so gegebenen Möglichkeit der frontalen (Kabel-)Montage, seiner optimierten Kabelführung in seinem Gehäuseinneren 16 sowie seines (dadurch auch) optimierten Bauraums insgesamt und seiner so gegebenen Möglichkeit durch Verzicht/Einsparung von zusätzlichen Schutzelementen spart so Kosten - durch seine Einsparung an Montagezeit, (zusätzlichen) Bauteilen und Bauraum.

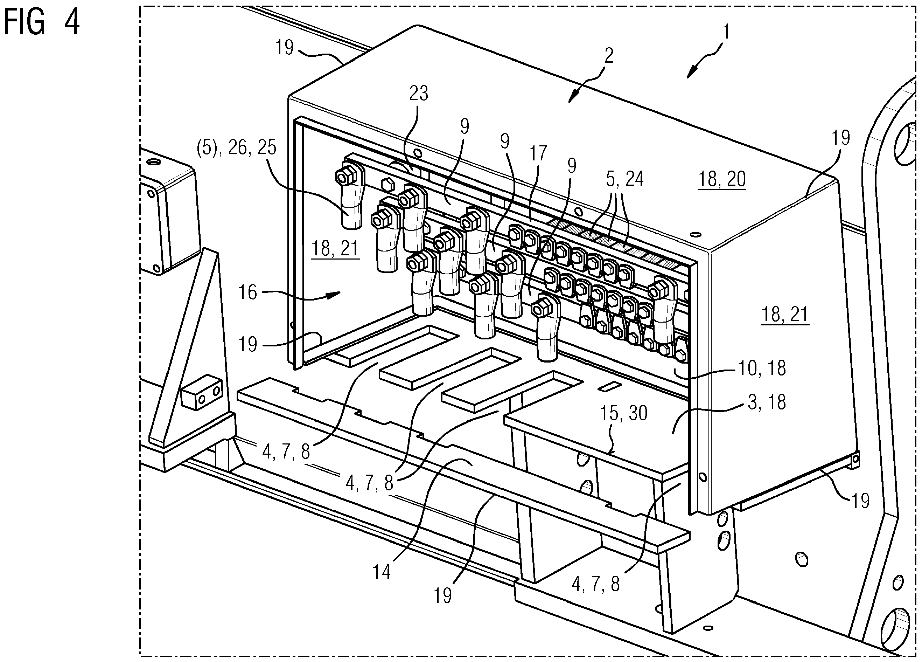

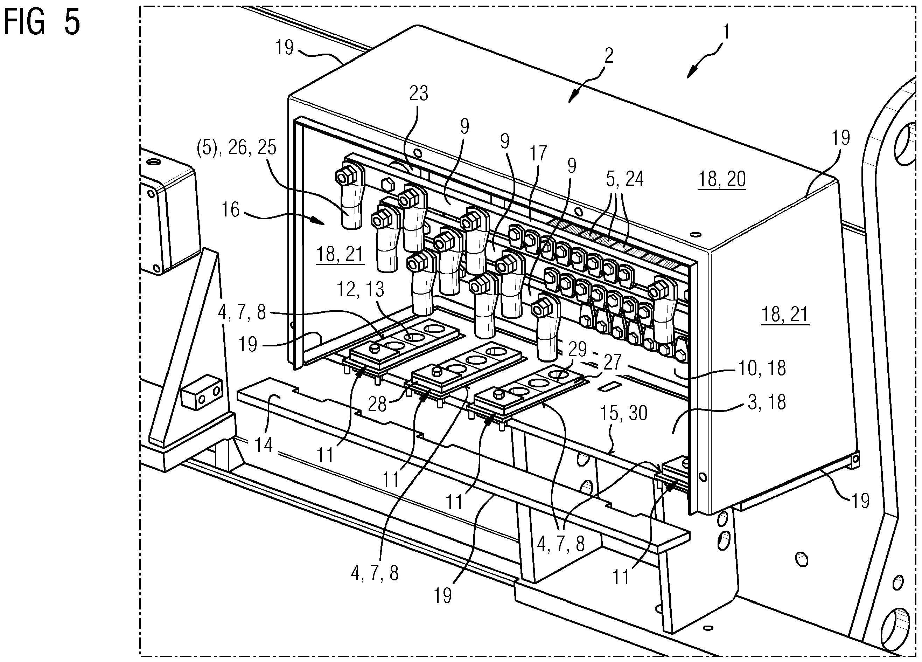

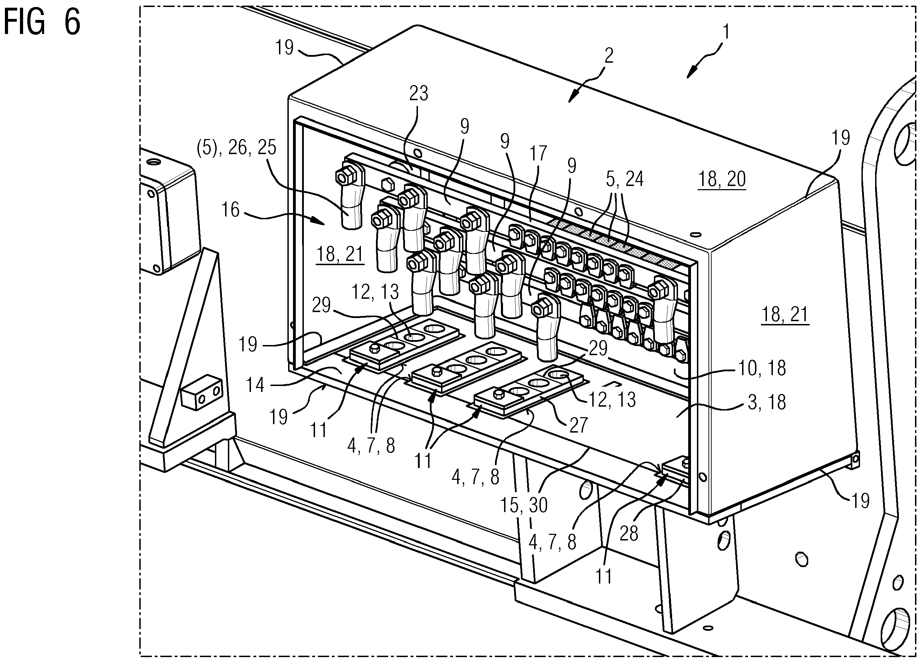

Kabelanschlusskasten mit frontaler Einführung der Anschlusskabel (Generator- und Motoranschlusskabel) und vertikal übereinander angeordneter Schaltschienen ("Stufenblech") (Figuren 4, 5 und 6)

Figuren 4, 5 und 6 zeigen in ihren jeweiligen Ansichten jeweils einen (zweiten) Kabelanschlusskasten 1 für den (elektrischen) Anschluss des Windkraftanlagengenerators.

Der (zweite) Kabelanschlusskasten 1 nach den Figuren 4, 5 und 6 ist funktions- und im Wesentlichen bau-/konstruktionsgleich zu dem Kabelanschlusskasten 1 nach den Figuren 1, 2 und 3. Diesbezügliche Ausführungen zum (ersten) Kabelanschlusskasten 1 nach den Figuren 1, 2 und 3 gelten somit für den (zweiten) Kabelanschlusskasten 1 nach den Figuren 4, 5 und 6 entsprechend.

Wie die Figuren 4, 5 und 6 - im Vergleich zu den Figuren 1, 2 und 3 - zeigen liegt der wesentliche konstruktive Unterschied zwischen diesen beiden Kabelanschlusskästen 1 nach den Figuren 1, 2 und 3 bzw. Figuren 4, 5 und 6 in der Anordnung der Schaltschienen 9 im Kabelanschlusskasten.

Nach den Figuren 4, 5 und 6 sind bei dortigem Kabelanschlusskasten 1 die drei Schaltschienen 9 (für jeder Phase eine Schaltschiene 9) - über die Isolatoren 23 verschraubt an einem an der Rückwand 10 angeordneten Stufenblech (nicht sichtbar) mit drei vertikalen und in unterschiedlicher Tiefe ausgebildeten Tragstufen - vertikal übereinander und in unterschiedlicher Tiefe im Kabelanschlusskasten 1 angeordnet.

Kabelführung bzw. Kabelanschluss ist im Übrigen entsprechend dem Kabelanschlusskasten 1 nach den Figuren 1, 2 und 3 bzw. angepasst an die vertikal und in unterschiedlicher Tiefe angeordneten Schaltschienen 9 ausgeführt.

Wie weiter die Figuren 4, 5 und 6 zeigen ist bei dortigem Kabelanschlusskasten 1 die die Aussparungen 7 aufweisende Bodenplatte 3 in ihrer Tiefe zurückgenommen, d.h. weniger tief; im Gegenzug ist die Kunststoffschiene 14 bei dem Kabelanschlusskasten 1 in ihrer Tiefe verbreitert, deckt aber auch hier die Aussparungen 7 bzw. die Aussparungsöffnungen 8 entlang der gesamten Kante 30 der Bodenplatte 3 ab.
Auch dieser Anschlusskasten 1 nach den Figuren 4, 5 und 6 ermöglicht eine ungehinderte, frontale Kabelmontage/-anschluss bzw. -Verschraubung im Anschlusskasten 1 durch einfaches Einlegen der Anschlusskabel 25 (5) bzw. Kundenlitzen 25 (5) in die Aussparungen 7 der Bodenplatte 3 (bei geöffneter Frontplatte) "von vorne".

## Patentansprüche

1. Kabelanschlusskasten (1) mit einem Gehäuse (2) mit zumindest einer ersten Gehäusewand (3), welche zumindest eine Durchführung (4) für ein Kabel (5) aufweist, und mit zumindest einer zweiten, sich an die erste Gehäusewand (3) anschließenden Gehäusewand (6), über welche der Kabelanschlusskasten (1) öffnenbar ist, wobei die Durchführung (4) als eine in der ersten Gehäusewand (3) eingebrachte Aussparung (7) mit einer Aussparungsöffnung (8) ausgebildet ist, welche Aussparungsöffnung (8) zu der zweiten, sich an die erste Gehäusewand (3) anschließenden Gehäusewand (6) gerichtet ist,
**dadurch gekennzeichnet , dass** in dem Kabelanschlusskasten (1) drei gegenüber dem Gehäuse (2) isolierte und jeweils für einen Phasenanschluss (U, V, W) vorgesehene Anschlussschienen (Schaltschiene) (9) in Reihe nebeneinander angeordnet sind, welche eingerichtet sind, dass dort mehrere durch die erste Gehäusewand (3) in den Kabelanschlusskasten (1) einführbare Kabel (5) in einer Reihe nebeneinander verschraubbar sind,
und mit einem Kabelführungsrahmen (11), welcher eingerichtet ist, um mehrere Kabel (5) in Reihe nebeneinander in dem Kabelführungsrahmen (11) angeordnet zugentlastend zu führen, und welcher derart an der ersten Gehäusewand (3) anordnenbar ist, dass eine Öffnung (12) des Kabelführungsrahmens (11) mit der Aussparung (7) fluchtet, wodurch der in diesem derartigen Zustand mit der ersten Gehäusewand (3) verschraubte Kabelführungsrahmen (11) mit der Aussparung (7) eine gemeinsame Öffnung (13) bildet, durch welche die Kabel (5) in den Kabelanschlusskasten (1) zugentlastend einführbar sind.

2. Kabelanschlusskasten (1) nach Anspruch 1, **dadurch gekennzeichnet, dass** die erste Gehäusewand (3) mehrere Durchführungen (4) aufweist, welche jeweils als eine in der ersten Gehäusewand (3) eingebrachte Aussparung (7) ausgebildet ist, deren Aussparungsöffnung (8) zu der zweiten, sich an die erste Gehäusewand (3) anschließende Gehäusewand (6) gerichtet ist.

3. Kabelanschlusskasten (1) nach einem der voranstehenden Ansprüche 1 bis 2, **dadurch gekennzeichnet, dass** die mehreren Aussparungen (7) kammartig nebeneinander liegend in der ersten Gehäusewand (3) eingebracht sind.

4. Kabelanschlusskasten (1) nach mindestens einem der voranstehenden Ansprüche 1 bis 3, **dadurch gekennzeichnet, dass** die Anschlussschiene (Schaltschiene) (9) zu einer Schutzarterfüllung eingerichtet ist.

5. Kabelanschlusskasten (1) nach mindestens einem der voranstehenden Ansprüche 1 bis 4, **gekennzeichnet** mit zumindest einer dritten Gehäusewand (10), welche weitere Durchführungen (4) für Kabel (5) in den Kabelanschlusskasten (1) aufweist, und mit der Anschlussschiene (9), die weiter derart eingerichtet ist, dass durch die dritte Gehäusewand (10) in den Kabelanschlusskasten (1) eingeführte Kabel (5) ebenfalls dort in einer Reihe nebeneinander verschraubbar sind.

6. Kabelanschlusskasten (1) nach mindestens einem der voranstehenden Ansprüche 1 bis 5, **gekennzeichnet** mit einer isolierenden Leiste (14), welche derart zwischen der ersten Gehäusewand (3) und der zweiten Gehäusewand (6) angeordnet ist, dass die Aussparungsöffnung (8) mittels der Leiste (14) begrenzt wird, und/oder welche zu einer Schutzarterfüllung eingerichtet ist.

7. Kabelanschlusskasten (1) nach mindestens dem voranstehenden Anspruch 6, **dadurch gekennzeichnet, dass** die Leiste (14) derart ausgebildet ist, dass diese Leiste (14) über eine Länge einer gemeinsamen Kante (15) zwischen der ersten Gehäusewand (3) und der zweiten Gehäusewand (4) zwischen der ersten Gehäusewand (3) und der zweiten Gehäusewand (6) angeordnet ist.

8. Kabelanschlusskasten (1) nach mindestens einem der voranstehenden Ansprüche 1 bis 7, **dadurch gekennzeichnet, dass** die erste Gehäusewand (3) eine Bodenplatte (Kabeldurchführungsplatte) und/oder die zweite Gehäusewand (6) eine abnehmbare Frontplatte oder eine Kabelanschlusskastenöffnungstür/-klappe sind/ist.

9. Kabelanschlusskasten (1) nach mindestens einem der voranstehenden Ansprüche 1 bis 8, **dadurch gekennzeichnet, dass** der Kabelanschlusskasten (1) ein Generatoranschlusskasten oder ein Motoranschlusskasten ist.

10. Dynamoelektrische Maschine mit einem Kabelanschlusskasten (1) nach einem oder mehreren der voranstehenden Ansprüche 1 bis 8.

11. Windkraftanlage mit einem Generator, der einen Kabelanschlusskasten (1) nach einem oder mehreren der voranstehenden Ansprüche 1 bis 8 aufweist.

## Claims

1. Cable connection box (1) with a housing (2) with at least one first housing wall (3), which has at least one feed-through (4) for a cable (5), and with at least one second housing wall (6) which connects to the first housing wall (3) and via which the cable connection box (1) can be opened, wherein the feed-through (4) is embodied as a recess (7) introduced in the first housing wall (3) with a recess opening (8), which recess opening (8) is directed towards the second housing wall (6) connecting to the first housing wall (3), **characterised in that** in the cable connection box (1) three connection rails (switching rails) (9), which are isolated from the housing (2) and provided for a phase connection (U, V, W) in each case, are arranged in series adjacent to one another and are configured such that a plurality of cables (5), which can be guided through the first housing wall (3) into the cable connection box (1), can be screwed together in a row adjacent to one another,
and with a cable guiding frame (11) which is configured to guide a plurality of cables (5) in series adjacent to one another in a strain-relieving manner in the cable guiding frame (11), and which can be arranged on the first housing wall (3) in such a manner that an opening (12) of the cable guiding frame (11) aligns with the recess (7), whereby the cable guiding frame (11) screwed together with the first housing wall (3) in this kind of state forms a shared opening (13) together with the recess (7), through which the cables (5) can be guided into the cable connection box (1) in a strain-relieving manner.

2. Cable connection box (1) according to claim 1,
**characterised in that** the first housing wall (3) has a plurality of feed-throughs (4), each of which being embodied as a recess (7) introduced in the first housing wall (3), the recess opening (8) of which being directed towards the second housing wall (6) connecting to the first housing wall (3).

3. Cable connection box (1) according to one of the preceding claims 1 to 2, **characterised in that** the plurality of recesses (7) are introduced in the first housing wall (3) such that they lie adjacent to one another in a comblike manner.

4. Cable connection box (1) according to at least one of the preceding claims 1 to 3, **characterised in that** the connection rails (switching rails) (9) are configured to fulfil a degree of protection.

5. Cable connection box (1) according to at least one of the preceding claims 1 to 4, **characterised by** at least one third housing wall (10), which has further feed-throughs (4) for cables (5) into the cable connection box (1), and with the connection rail (9), which is further configured such that cables (5) introduced through the third housing wall (10) into the cable connection box (1) likewise can be screwed together at that position in a row adjacent to one another.

6. Cable connection box (1) according to at least one of the preceding claims 1 to 5, **characterised by** an isolating bar (14), which is arranged between the first housing wall (3) and the second housing wall (6) in such a manner that the recess opening (8) is delimited by means of the bar (14), and/or which is configured to fulfil a degree of protection.

7. Cable connection box (1) according to at least the preceding claim 6, **characterised in that** the bar (14) is embodied in such a manner that said bar (14) is arranged over a length (14) of a shared edge (15) between the first housing wall (3) and the second housing wall (4) between the first housing wall (3) and the second housing wall (6).

8. Cable connection box (1) according to at least one of the preceding claims 1 to 7, **characterised in that** the first housing wall (3) is a base plate (cable feed-through plate) and/or the second housing wall (6) is a removable front panel or a cable connection box opening door/flap.

9. Cable connection box (1) according to at least one of the preceding claims 1 to 8, **characterised in that** the cable connection box (1) is a generator connection box or a motor connection box.

10. Dynamoelectric machine with a cable connection box (1) according to one or more of the preceding claims 1 to 8.

11. Wind turbine with a generator, which has a cable connection box (1) according to one or more of the preceding claims 1 to 8.

## Revendications

1. Boîte (1) de raccordement de câble, comprenant un boîtier (2), ayant au moins une première paroi (3), laquelle a au moins une traversée (4) pour un câble (5), et ayant au moins, se raccordant à la première paroi (3), une deuxième paroi (6), par laquelle la boîte (1) de raccordement de câble peut être ouverte, la traversée (4) étant constituée sous la forme d'un évidement (7) ménagé dans la première paroi (3) et ayant une ouverture (8), laquelle ouverture (8) est dirigée vers la deuxième paroi (6) se raccordant à la première paroi (3),
**caractérisée en ce que**, dans la boîte (3) de raccordement de câble, sont montés en série, les uns à côtés des autres en une rangée, trois rails de raccordement (rails de distribution) (9) isolés par rapport au boîtier (2) et prévus chacun pour une borne (U, V, W) de phase, lesquels sont conçus de manière à pouvoir y visser en rangée, les uns à côté des autres, plusieurs câbles (5) pouvant être insérés dans la boîte (1) de raccordement de câble à travers la première paroi (3),
et comprenant un cadre (11) de guidage de câble, qui est conçu pour guider, avec relâchement des tensions, plusieurs câbles (5) disposés en rangée les uns à côté des autres dans le cadre (11) de guidage de câble et qui peut être mis sur la première paroi (3) de manière à ce qu'une ouverture (12) du cadre de guidage de câble soit alignée avec l'évidement (7), grâce à quoi le cadre (11) de guidage de câble, vissé dans ce genre d'état avec la première paroi (3), forme avec l'évidement (7) une ouverture (13) commune par laquelle les câbles (5) peuvent être introduits avec relâchement des tensions dans la boîte (1) de raccordement de câble.

2. Boîte (1) de raccordement de câble suivant la revendication 1, **caractérisée en ce que** la première paroi (3) a plusieurs traversées (4), qui sont constituées chacune sous la forme d'un évidement (7) ménagé dans la première paroi (3), dont l'ouverture (8) est dirigée vers la deuxième paroi (6) se raccordant à la première paroi (3).

3. Boîte (1) de raccordement de câble suivant l'une des revendications précédentes 1 à 2, **caractérisée en ce que** les plusieurs évidements (7) sont ménagés à la manière d'un peigne les uns à côté des autres dans la première paroi (3).

4. Boîte (1) de raccordement de câble suivant au moins l'une des revendication précédentes 1 à 3, **caractérisée en ce que** le rail de raccordement (rail de distribution) (9) est conçu pour faire office d'une sorte de protection.

5. Boîte (1) de raccordement de câble suivant au moins l'une des revendications précédentes 1 à 4, **caractérisée en ce qu'**elle comprend au moins une troisième paroi (10) de boîtier, qui a d'autres traversées (4) pour des câbles dans la boîte de raccordement de câble et comprenant le rail (9) de raccordement, qui est conçu, en outre, de manière à ce que des câbles (5), introduits dans la boîte (1) de connexion de câble à travers la troisième paroi (10), puissent y être également vissés les uns à côté des autres en une rangée.

6. Boîte (1) de raccordement de câble suivant au moins l'une des revendications précédentes 1 à 5, **caractérisée par** une réglette (14) isolante, qui est disposée entre la première paroi (3) et la deuxième paroi (6), de manière à délimiter l'ouverture (8) de l'évidement au moyen de la baguette (14) et/ou qui est conçue pour faire office d'une sorte de protection.

7. Boîte (1) de raccordement de câble suivant au moins la revendication précédente 6, **caractérisée en ce que** la baguette (14) est constituée de manière à ce que la baguette (14) soit disposée entre la première paroi (13) et la deuxième paroi (6), sur une longueur d'un bord (15) commun entre la première paroi (3) et la deuxième paroi (4).

8. Boîte (1) de raccordement de câble suivant au moins l'une des revendications précédentes 1 à 7, **caractérisée en ce que** la première paroi (3) est une plaque de plancher (plaque de traversée de câble) et/ou la deuxième paroi (6) est une plaque avant amovible ou une porte/volet d'ouverture de la boîte de raccordement de câble.

9. Boîte (1) de raccordement de câble suivant au moins l'une des revendications précédentes 1 à 8, **caractérisée en ce que** la boîte (1) de raccordement de câble est une boîte de raccordement d'une génératrice ou une boîte de raccordement d'un moteur.

10. Machine dynamoélectrique ayant une boîte (1) de raccordement de câble suivant l'une ou plusieurs des revendications précédentes 1 à 8.

11. Eolienne, comprenant une génératrice qui a une boîte (1) de raccordement de câble suivant l'une ou plusieurs des revendications précédentes 1 à 8.
